# EUROPEAN PATENT APPLICATION

(11) **EP 3 320 879 A1**
(43) Date of publication of application: **16.05.2018**
(21) Application number: 16821563.0
(22) Date of filing: 27.06.2016
(51) Int. Cl.: A61C 9/00, A61C 19/04

(54) **COMPOSITION FOR IMPROVING PHOTO SCANNING, AND METHOD FOR IMPROVING PHOTO SCANNING OF PRODUCT**

(30) Priority: 08.07.2015 KR 20150097417; 25.08.2015 KR 20150119838
(71) Applicant: Park, Sung Won, Bucheon-si, Gyeonggi-do 14538 (KR); Park, June Beom, Incheon 21974 (KR)
(72) Inventor: PARK, Sung Won Su, Gyeonggi-do 14538 (KR); PARK, June Beom, Incheon 21974 (KR)
(74) Representative: Vos, Derk
(86) International application number: PCT/KR2016/006826
(87) International publication number: WO 2017/007157

(57) **Abstract**

The present disclosure relates to a light scannability enhancer composition and a method of enhancing light scannability of an article. The light scannability enhancer composition includes 100 parts by weight of a white pigment, 12 parts to 30 parts by weight of a binder resin, and 50 parts to 700 parts by weight of a solvent for dissolving the binder resin. In addition, the method of enhancing light scannability of an article includes coating the light scannability enhancer composition on an article.

## Description

### TECHNICAL FIELD

The present disclosure relates to a light scannability enhancer composition and a method of enhancing light scannability of an article, and more particularly, to a liquid light scannability enhancer composition and a method of enhancing light scannability of an article, e.g., tooth, gingiva, or a dental model.

### BACKGROUND ART

Dental models such as implants are generally made of metal such as titanium. Therefore, there is a problem in that light is not irregularly reflected but regularly reflected upon light scanning for computer-aided design (CAD)/computer-aided manufacturing (CAM) so that the shape thereof is not accurately identified.

Conventionally, in order to induce irregular reflection of a metal surface to be light-scanned, a paste-type coating material is applied to the metal surface using a coating tool such as a brush, or titanium powder is sintered at high temperature to weld the titanium powder to the metal surface (Korean Application Publication 2010-0090564). However, these methods not only increase the manufacturing cost of dental models by complicating the process for forming an irregular reflection surface, but also form a paint film having a non-uniform thickness depending on the position in the same dental model or a paint film having a thickness which is different from other dental models, on each dental model for a plurality of dental models. Thus, it is not possible to obtain precise and reproducible light-scanning data, which is problematic.

### DETAILED DESCRIPTION OF THE INVENTION

### TECHNICAL PROBLEM

According to an embodiment of the present invention, a liquid light scannability enhancer composition is provided.

According to another embodiment of the present invention, a method of enhancing liquid light scannability of an article is provided.

### TECHNICAL SOLUTION

In accordance with an aspect of the present invention, there is provided a light scannability enhancer composition that includes:

100 parts by weight of a white pigment;

12 parts to 30 parts by weight of a binder resin; and

50 parts to 700 parts by weight of a solvent for dissolving the binder resin.

The white pigment may have an average particle diameter in a range of 50 nanometers (nm) to 400 nm.

The white pigment may include at least one selected from the group consisting of titanium dioxide, zinc oxide, zinc sulfide, lithopone, lead white, and antimony oxide.

The binder resin may include natural resin, synthetic resin, rubber, or a mixture of two or more thereof.

The solvent may include a volatile substance.

The solvent may include at least one of water and alcohol.

The light scannability enhancer composition may have a viscosity in a range of 3 centipoises (cps) to 120 cps.

The light scannability enhancer composition may further include a dispersant in a range of 0.5 parts to 10 parts by weight.

At least one of the white pigment, the binder resin, the solvent, and the dispersant may be approved by the U.S. Food and Drug Administration (FDA).

In accordance with another aspect of the present invention, there is provided a method of enhancing light scannability of an article, the method including coating the light scannability enhancer composition on an article.

The method of enhancing light scannability of an article may further include removing the solvent from the article coated with the light scannability enhancer composition.

The article may be metal or non-metal.

The article may be a dental model.

The article may be a natural tooth, an implant abutment in an oral cavity, or gingiva.

### ADVANTAGEOUS EFFECTS OF THE INVENTION

A light scannability enhancer composition according to an embodiment of the present invention may repeatedly and reproducibly form a paint film on a surface of a tooth, gingiva, or a dental model to a uniform thickness. Accordingly, it is possible to obtain precise and reproducible light-scanning data. In addition, the light scannability enhancer composition is advantageous in that the light scannability enhancer composition is directly applicable to an article and harmless to humans. Further, the light scannability enhancer composition may be applicable to a non-metallic article, such as glass or plaster, in addition to a metallic article.

Further, a paint film prepared using the light scannability enhancer composition does not easily dissolve in saliva. Thus, the paint film may have excellent shape retention in an oral cavity and may be easily separated from an article after light scanning.

Furthermore, as compared with conventional methods such as a paste coating method using a coater or a method of welding titanium powder by sintering at high temperature, a method of enhancing light scannability of an article according to an embodiment of the present invention is advantageous in that the processes of the method are simple, and the processing cost is low.

### DESCRIPTION OF THE DRAWINGS

FIG. 1 is an image of the paint films formed by coating light scannability enhancer compositions prepared in Examples 1 to 4 and Comparative Examples 1 to 3 in parallel on a transparent acrylic plate.
FIGS. 2A to 2E are each a three-dimensional computer-aided design (CAD) image obtained by light scanning the paint films prepared in Examples 1 to 4 and Comparative Examples 1 to 3.

### BEST MODE

Hereinafter a light scannability enhancer composition according to an embodiment of the present invention will be described in detail.

The light scannability enhancer composition according to an embodiment of the present invention may include 100 parts by weight of a white pigment, 12 parts to 30 parts by weight of a binder resin, and 50 parts to 700 parts by weight of a solvent for dissolving the binder resin.

When a content of the binder resin is less than 12 parts by weight based on 100 parts by weight of the white pigment, a paint film formed using the light scannability enhancer composition may melt in water (e.g., saliva), and thus light scannability of the article may deteriorate, and the paint film may not easily be separated from the article after light scanning. When a content of the binder resin is greater than 30 parts by weight based on 100 parts by weight of the white pigment, a paint film formed using the light scannability enhancer composition may have a non-uniform thickness depending on the position, and thus light scannability of the article may deteriorate.

When a content of the solvent is less than 50 parts by weight based on 100 parts by weight of the white pigment, a content ratio of the white pigment may be excessive, and thus, uniform dispersion of the white pigment upon coating may be difficult. When a content of the solvent is greater than 700 parts by weight, obliterating power of the white pigment may deteriorate upon formation of a paint film.

The white pigment may cause irregular reflection upon light scanning of an article, and cause the article to have a white color (i.e., a color similar to that of a tooth).

The white pigment may have an average particle diameter in a range of 50 nanometers (nm) to 400 nm (for example, 100 nm to 300 nm). When an average particle diameter of the white pigment is within this range (50 nm to 400 nm), obliterating power of the white pigment may be excellent, which may result in excellent irregular reflection effects as well as advantage in shape identification.

The white pigment may include at least one selected from the group consisting of titanium dioxide (TiO₂), zinc oxide, zinc sulfide, lithopone, lead white, and antimony oxide.

The binder resin may include natural resin, synthetic resin, rubber, or a mixture of two or more thereof. In particular, the binder resin may be a thermoplastic resin or a thermosetting resin. In particular, the binder resin may be selected from the group consisting of poly(lactic-co-glycolic acid) (PLGA); rosin; shellac; vinyl chloride resin; vinyl acetate resin; vinyl chloride/vinyl acetate copolymer (e.g., UCAR™ VYHH); vinyl chloride/vinyl acetate/vinyl alcohol copolymer (e.g., UCAR™ VAGH); alkyd resin; polyester-based resin such as polyglycolic acid, polylactic acid, polycaprolactone, polyethylene adipate, polyhydroxyalkanoate, polyhydroxybutyrate, poly (3-hydroxybutyrate-co-3-hydroxyvalerate), polyethylene terephthalate, polybutylene terephthalate, polytrimethylene terephthalate, polyethylene naphthalate, and vectran; polyurethane-based resin such as spandex; epoxy-based resin such as bisphenol A-type epoxy resin, bisphenol F-type epoxy resin, resorcinol epoxy resin, phenol novolac resin, and cresol novolac epoxy resin; and acrylic resin such as poly(methyl acrylate) and poly(methyl methacrylate).

The solvent, in addition to dissolving the binder resin, may improve spreadability of the light scannability enhancer composition upon coating the composition on an article, and thus the composition may be coated on the article in a uniform thickness.

The solvent may include a volatile substance. Accordingly, the solvent may naturally evaporate from the article coated with the light scannability enhancer composition within a short period of time. That is, the light scannability enhancer composition coated on the article may be naturally dried within a short period of time due to rapid evaporation of the solvent.

The solvent may include at least one of water and alcohol. In particular, the solvent may include ethanol. However, the present invention is not limited thereto; any organic solvent and/or inorganic solvent that has higher volatility than water may be included in the solvent.

The light scannability enhancer composition may have a viscosity in a range of 3 centipoises (cps) to 120 cps. When a viscosity of the light scannability enhancer composition is within this range, a paint film having a uniform and suitable thickness may be formed. The term "viscosity", as used herein, refers to a viscosity measured using Brookfield DV-□ Rheometer RPM (at a shear rate of 25/s) at room temperature (25□).

The light scannability enhancer composition may further include a dispersant in a range of 0.5 parts to 10 parts by weight, based on 100 parts by weight of the white pigment.

When a content of the dispersant is within this range, agglomeration of the white pigment may be prevented without a great increase in production cost, and a paint film having excellent irregular reflection effects may be formed.

In a paint film formed by coating the light scannability enhancer composition on an article, the dispersant may increase a compactness between particles of the white pigment and improve adherent strength (i.e., adhesive strength) between the paint film and the article.

The dispersant may be a surfactant. In particular, the dispersant may include a nonionic surfactant (e.g., polyvinyl alcohol, polyacrylic acid, polyoxyethylene lauryl ether, or sodium lauryl sulfate); a cationic surfactant (e.g., a C₁₂-C₁₆ alkyl benzene dimethyl ammonium chloride, a C₈-C₁₈ alkyl trimethyl ammonium chloride, or distearyl dimethyl ammonium chloride); an anionic surfactant (e.g., sodium dodecyl sulfate or sodium dodecyl benzene sulfonate); an amphiphilic ionic surfactant (e.g., an amino acid-type surfactant, a myristyl betaine-type surfactant, a glycine-type surfactant, an alanine-type surfactant, a sulfobetaine-type surfactant, lecithin, or taurine); or a combination thereof.

At least one of the white pigment, the binder resin, the solvent, and the dispersant may be approved by the U.S. Food and Drug Administration (FDA).

The light scannability enhancer composition according to an embodiment of the present invention described above may be a suspension in which titanium dioxide is dispersed in a liquid material (which may also be referred to as a "liquid light scannability enhancer composition"). The liquid material may include the solvent, the binder resin dissolved in the solvent, and optionally, the dispersant dissolved in the solvent.

Hereinafter a method of enhancing light scannability of an article according to an embodiment of the present invention will be described in detail.

The method may include coating the light scannability enhancer composition on an article (hereinafter, simply referred to as "coating").

The coating may be performed by using a brush. In particular, the coating may be performed by wetting the brush in the composition and brushing the article using the wet brush. For example, the brushing may be performed once.

The method is directly applicable to an article. In addition, as compared with conventional methods such as a paste coating method using a coater or a method of welding titanium powder by sintering at high temperature, the processes of the method are simple, and equipment cost and processing cost may be reduced. Further, for a plurality of articles, paint films having a uniform thickness may be reproducibly obtained. As such, when for a plurality of articles, paint films having a uniform thickness may be reproducibly obtained, preciselight-scanning data may be reproducibly obtained.

The method may further include removing the solvent from the article coated with the light scannability enhancer composition. The solvent may be removed by natural drying.

The article may be metal or non-metal.

The metal may be titanium, iron, tin, zinc, copper, or an alloy thereof, but the metal is not limited thereto.

The non-metal may be glass, plaster, wax, plastic, a tooth or gingiva in an oral cavity, an implant abutment in an oral cavity, or a mobile phone case.

The article may be a dental model. However, the present invention is not limited thereto; the article may be any article capable of being light-scanned.

Hereinafter the present invention will be described with reference to Examples; however, the present invention is not limited thereto.

Examples 1 to 4 and Comparative Examples 1 to 3: Preparation of light scannability enhancer composition

A titanium dioxide suspension (an average particle diameter of titanium dioxide is 300 nm), ethanol, and liquid binder resin (SUMIX ACV00567 available from KCC Paint) were mixed together at ratios shown in Table 1 to thereby obtain light scannability enhancer compositions. The titanium dioxide suspension includes deionized water and 70 percent by weight (wt%) of titanium dioxide dispersed in the deionized water. In addition, the liquid binder resin includes 8 wt% of a FDA-approved acrylic resin (available from Wooshin Pigment Corp.) dissolved in ethanol.

**Table 1**

| | Content (parts by weight) | | |
|---|---|---|---|
| | Titanium dioxide (in titanium dioxide suspension) | Ethanol | Binder resin (in liquid binder resin) |
| Example 1 | 100 | 138 | 12.0 |
| Example 2 | 100 | 154.1 | 13.4 |
| Example 3 | 100 | 193.2 | 16.8 |
| Example 4 | 100 | 345 | 30.0 |
| Comparative Example 1 | 100 | 77.05 | 6.7 |
| Comparative Example 2 | 100 | 115 | 10.0 |
| Comparative Example 3 | 100 | 402.5 | 35.0 |

### Evaluation Example 1: Evaluation of viscosity of light scannability enhancer composition

The viscosities of the light scannability enhancer compositions prepared in Examples 1 to 4 and Comparative Examples 1 to 3 were measured, and the results thereof are shown in Table 2. The measurement was performed using Brookfield DV-□ Rheometer as a viscosity measuring device at room temperature (at a temperature of 25□).

### Evaluation Example 2: Evaluation of thickness uniformity of paint films

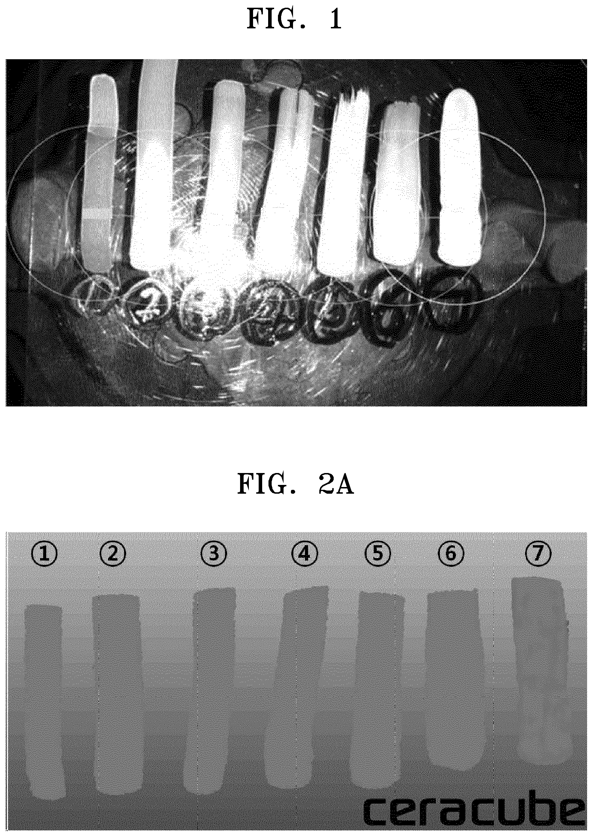

Seven brushes were respectively wet with the light scannability enhancer compositions prepared in Examples 1 to 4 and Comparative Examples 1 to 3, and a transparent acrylic plate was brushed once with each brush on parallel positions, to thereby form seven paint films. Subsequently, each paint film was naturally dried for about 60 seconds. As a result, the transparent acrylic plate, on which seven paint films were formed, was obtained. Subsequently, the transparent acrylic plate was photographed. The image thereof is shown in FIG. 1. In FIG. 1, the paint films of Comparative Example 1 (①), Comparative Example 2 (②), Example 1 (③), Example 2 (④), Example 3 (⑤), Example 4 (⑥), and Comparative Example 3 (⑦) are shown from left to right. In FIG. 1, the white portions are the paint films.

Referring to FIG. 1, each of the paint films formed from the light scannability enhancer compositions of Examples 1 to 4 and Comparative Examples 1 and 2 was found to have a uniform thickness. However, the paint film formed from the light scannability enhancer composition of Comparative Example 3 was found to have a non-uniform thickness depending on a position.

### Evaluation Example 3: Evaluation of reproducibility regarding formation of paint film having a particular thickness

Seven brushes were respectively wet with the light scannability enhancer compositions prepared in Examples 1 to 4 and Comparative Examples 1 to 3, and a transparent acrylic plate was brushed once with each brush on parallel positions, to thereby form seven paint films. Subsequently, each paint film was naturally dried for about 60 seconds. The same process was performed on ten transparent acrylic plates. As a result, the 10 transparent acrylic plates, each having seven paint films formed thereon, were obtained. Subsequently, a thickness of each of the paint films formed on the transparent acrylic plates was measured by using a thickness meter (Elcometer 456 available from Elcometer, UK). The results thereof are shown in Table 2. In detail, in the evaluation of reproducibility, wetting a brush, brushing, and drying were performed for one transparent acrylic plate, and then, these three processes were performed again for the other transparent acrylic plates.

**Table 2**

| | Viscosity of composition (cps) | Thickness of paint film (*µ*m) |
|---|---|---|
| Example 1 | 60 | 0.5-5 |
| Example 2 | 90 | 10-13 |
| Example 3 | 110 | 13-16 |
| Example 4 | 140 | 14-20 |
| Comparative Example 1 | 36 | 6-8 |
| Comparative Example 2 | 75 | 7-10 |
| Comparative Example 3 | 160 | 20-80 |

Referring to Table 2, the paint films formed repeatedly on 10 transparent acrylic plates using each of the light scannability enhancer compositions of Examples 1 to 4 and Comparative Examples 1 and 2 were found to have a maximum thickness deviation of 6 micrometers (µm). Accordingly, it was found that reproducibility regarding formation of a paint film having a particular thickness was excellent for the light scannability enhancer compositions of Examples 1 to 4 and Comparative Examples 1 and 2. In contrast, the paint films formed repeatedly on 10 transparent acrylic plates using the light scannability enhancer composition of Comparative Example 3 were found to have a maximum thickness deviation of 60 µm. Accordingly, it was found that reproducibility regarding formation of a paint film having a particular thickness was poor.

### Evaluation Example 4: Evaluation of shape retention and separability in oral cavity

Seven brushes were respectively wet with the light scannability enhancer compositions prepared in Examples 1 to 4 and Comparative Examples 1 to 3, and a transparent acrylic plate was brushed once with each brush on parallel positions, to thereby form seven paint films. Subsequently, each paint film was naturally dried for about 60 seconds. As a result, the transparent acrylic plate, on which seven paint films were formed, was obtained. Subsequently, each of the paint films was rubbed with a saliva-wet finger to observe a degree of dissolution of each of the paint films with respect to saliva. The degree of dissolution was classified into three classes as follows. Subsequently, each of the paint films was scratched using a finger nail to observe a degree of separation of each of the paint films from the transparent acrylic plate. The degree of separability was classified into three classes as follows. The observation results are shown in Table 3.

| <Dissolution resistance with respect to saliva> | <Separability> |
|---|---|
| ⊚: Not dissolved at all | ⊚: Very well separated |
| ○: Slightly dissolved | ○: well separated |
| ×: Dissolved well | ×: Rarely separated |

**Table 3**

| | Dissolution resistance with respect to saliva | Separability |
|---|---|---|
| Example 1 | ○ | ○ |
| Example 2 | ○ | ○ |
| Example 3 | ○ | ○ |
| Example 4 | ⊚ | ⊚ |
| Comparative Example 1 | × | × |
| Comparative Example 2 | × | × |
| Comparative Example 3 | ⊚ | ⊚ |

Referring to Table 3, it was found that the paint films prepared using the light scannability enhancer compositions of Examples 1 to 4 and Comparative Example 3 were not dissolved well in saliva and easily separated from a transparent acrylic plate. In contrast, it was found that the paint films prepared using the light scannability enhancer compositions of Comparative Examples 1 and 2 were dissolved well in saliva and then rarely separated from a transparent acrylic plate. In light of such results, it was found that the paint films prepared using the light scannability enhancer compositions of Examples 1 to 4 and Comparative Example 3 have excellent shape retention in an oral cavity and separability after light scanning, as compared with the paint films prepared using the light scannability enhancer compositions of Comparative Examples 1 and 2.

### Evaluation Example 5: Evaluation of light scannability

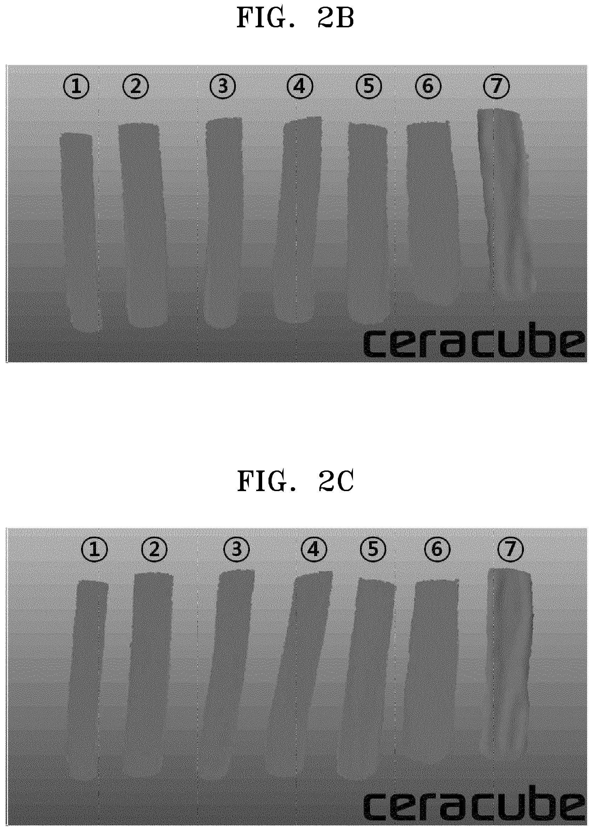

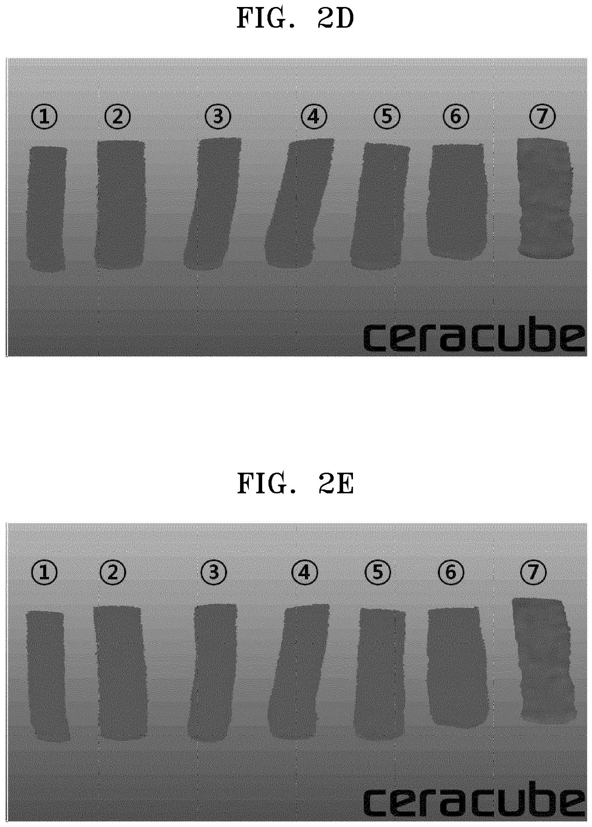

Seven brushes were respectively wet with the light scannability enhancer compositions prepared in Examples 1 to 4 and Comparative Examples 1 to 3, and a transparent acrylic plate was brushed once with each brush on parallel positions, to thereby form seven paint films. Subsequently, each paint film was naturally dried for about 60 seconds. As a result, the transparent acrylic plate, on which seven paint films were formed, was obtained. Next, final three-dimensional computer-aided design (CAD) images of each of the paint films were obtained using Ceracube® Dental CAD/CAM System. The results thereof are shown in FIGS. 2A to 2E. FIG. 2A is a frontal CAD image of each paint film, FIG. 2B is a CAD image with the left side of the plate turned downward, FIG. 2C is a CAD image with the right side of the plate turned downward, FIG. 2D is a CAD image with the upper side of the plate turned downward, and FIG. 2E is a CAD image with the lower side of the plate turned downward.

Referring to FIGS. 2A to 2E, the paint films prepared using the light scannability enhancer compositions of Examples 1 to 4 and Comparative Examples 1 and 2 were found to have excellent light scannability. However, as described in Evaluation Example 4, the paint films prepared using the light scannability enhancer compositions of Comparative Examples 1 and 2 easily dissolve in an oral cavity, and thus may have poor light scannability when used in an oral cavity. In contrast, as described in Evaluation Examples 2 and 3, the paint film prepared using the light scannability enhancer composition of Comparative Example 3 has a non-uniform thickness and thus was found to have poor light scannability.

While one or more example embodiments of the present invention have been described with reference to the figures and Examples, these are illustrative purposes only, and it will be understood by those of ordinary skill in the art that various changes may be made therein without departing from the spirit of the present invention. Accordingly, the scope of the present invention should be defined by the following claims.

## Claims

1. A light scannability enhancer composition comprising:
100 parts by weight of a white pigment;
12 parts to 30 parts by weight of a binder resin; and
50 parts to 700 parts by weight of a solvent for dissolving the binder resin.

2. The light scannability enhancer composition of claim 1, wherein the white pigment has an average particle diameter in a range of 50 nanometers (nm) to 400 nm.

3. The light scannability enhancer composition of claim 1, wherein the white pigment comprises at least one selected from the group consisting of titanium dioxide, zinc oxide, zinc sulfide, lithopone, lead white, and antimony oxide.

4. The light scannability enhancer composition of claim 1, wherein the binder resin comprises natural resin, synthetic resin, rubber, or a mixture of two or more thereof.

5. The light scannability enhancer composition of claim 1, wherein the solvent comprises a volatile substance.

6. The light scannability enhancer composition of claim 5, wherein the solvent comprises at least one of water and alcohol.

7. The light scannability enhancer composition of claim 1, having a viscosity in a range of 3 centipoises (cps) to 120 cps.

8. The light scannability enhancer composition of claim 1, further comprising 0.5 parts to 10 parts by weight of a dispersant.

9. The light scannability enhancer composition of claim 8, wherein at least one of the white pigment, the binder resin, the solvent, and the dispersant is approved by the U.S. Food and Drug Administration (FDA).

10. A method of enhancing light scannability of an article, the method comprising coating an article with the light scannability enhancer composition of any one of claims 1 to 9.

11. The method of claim 10, further comprising removing the solvent from the article coated with the light scannability enhancer composition.

12. The method of claim 10, wherein the article is metal or non-metal.

13. The method of claim 10, wherein the article is a dental model.
